# EUROPEAN PATENT APPLICATION

(11) **EP 2 527 710 A1**
(43) Date of publication of application: **28.11.2012**
(21) Application number: 11167744.9
(22) Date of filing: 26.05.2011
(51) Int. Cl.: F16L 55/26, G01N 29/265

(54) **Apparatus for pipeline inspection and method of pipeline inspection**

(71) Applicant: Pii Limited, Cramlington, Northumberland NE23 1WW (GB)
(72) Inventor: Herron, William, Northumberland NE23 1WW (GB); Palma, Robert, Northumberland NE23 1WW (GB)
(74) Representative: McWilliams, David John

(57) **Abstract**

An apparatus (10) for pipeline inspection includes a sensor unit (14) having an array of ultrasonic sensors (16) for inspecting a pipe wall. The sensor unit (14) includes a skid (18) having an outer surface (20) intended to run adjacent or in contact with a pipe wall. The sensors (16) are arranged at a stand off from the outer surface (20) of the skid (18). The apparatus (10) includes a mechanism (22) for moving the sensor unit (14) radially with respect to a longitudinal axis (X) of a body of the apparatus, between a first radial position and a second radial position, to position the outer surface (20) of the skid (18) in the direction of a pipe wall, for inspection of multi-diameter pipelines. The sensor unit (14) forms part of a 4-bar linkage (28) which is spring biased, for biasing the sensor unit (14) in a radial direction in said first and second radial positions.

## Description

The present disclosure relates to a pipeline inspection apparatus and a method of pipeline inspection.

It is known to carry out an inspection of a pipeline using an apparatus, commonly referred to as a pipeline pig, which travels inside the pipeline to measure or detect defects in the wall of the pipeline. Such an apparatus may include an array of ultrasonic sensors for measuring the wall thickness of the pipeline and/or for detecting cracks in the wall of a pipeline.

Conventionally, ultrasonic sensors are only used in liquid-filled pipelines, wherein the liquid in the pipeline provides a couple medium for transferring ultrasonic waves from the ultrasonic sensors to the pipe wall.

Typically, the ultrasonic sensors are mounted on a skid, which is designed to run adjacent or in contact with a pipe wall, e.g. as a pig carries out an inspection run through a pipeline. The sensors are arranged at a stand off from the outer surface of the skid, in order to protect the sensors against wear or other damage from contact with the pipe wall.

A conventional skid consists of a generally helical elongate member, which is arranged in a bowed configuration between a pair of skid cups (one at either end of the skid). This configuration is used to provide a clamping force between the outer surface of the skid and an inner surface of the pipe.

It is desirable to maintain a generally constant stand off between the sensors and the pipe wall during an inspection run along a pipeline. However, this is not always possible using a conventional skid of the kind discussed above, particularly in bends.

A particular problem is that conventional skids and skid cups consist of thick plastics parts. These parts are required to deform through bends and other pipeline features.

However, the mode of deformation is rarely uniform, which makes it difficult to control the clamping force that a conventional skid will provide against the pipe wall.

In order to address this problem, it is known to provide leaf springs which act on the skid, in an attempt to ensure that the skids remain biased against the pipe wall through bends or changes in pipe diameter etc. However, the design process relies heavily on trial and error and cannot be modelled acurately.

The disclosure proposes a pipeline apparatus which overcomes or mitigates one or more of the above problems, or other disadvantages or problems associated with conventional skids for in-line inspection of pipelines using ultrasonic sensors.

The disclosure provides an apparatus for pipeline inspection, the apparatus comprising a body having a longitudinal axis and a sensor unit in association with said body, wherein the sensor unit includes an array of ultrasonic sensors for inspecting a pipe wall, and further includes a skid having an outer surface intended to run adjacent or in contact with a pipe wall, wherein said sensors are arranged at a stand off from the outer surface of the skid, and wherein the apparatus includes a mechanism for biasing the outer surface of the skid into contact with a pipe wall, and for permitting movement of the sensor unit between a first radial position and a second radial position in response to changes in pipe diameter.

In exemplary embodiments, said mechanism includes first and second suspension members configured for biasing the sensor unit in a radial direction, wherein said first and second suspension members are axially off set from one another with respect to the longitudinal axis of the body.

In exemplary embodiments, said mechanism defines a linkage arranged for permitting movement of the sensor unit between a first radial position and a second radial position.

In exemplary embodiments, the sensor unit is mounted on a carrier, said carrier is mounted between first and second suspension members, and said first and second suspension members are arranged to pivot relative to said longitudinal axis of the body, for moving the sensor unit between a first radial position and a second radial position.

The proposed apparatus facilitates accurate modelling and maintenance of the mechanism, optimising performance and providing improved inspection results, particularly in bends and close to welds, dents and other pipeline features.

The disclosure further provides a method of pipeline inspection for a pipeline having a first section with a first bore diameter and a second section with a second bore diameter which is less than or greater than the first bore diameter, said method including the steps of:
providing a pipeline apparatus for in-line inspection of the pipeline, said apparatus including a sensor unit including an array of ultrasonic sensors for inspecting the wall of the pipeline; and sending the apparatus on a continuous run through said first and second sections of the pipeline, wherein a mechanism on said apparatus is used to position the sensor unit against an inner surface of the first section and to automatically re-position the sensor unit against an inner surface of the second section upon a change in bore diameter between said first and second sections of the pipeline.

In exemplary embodiments, the mechanism is configured for biasing the sensor unit in a radial direction, and wherein the sensor unit is spring-biased for movement from a first radial position to a second radial position during movement of the apparatus through a pipeline, if said second bore diameter is greater than said first bore diameter.

The accompanying drawings, which are incorporated in and constitute a part of the specification, illustrate one or more embodiments and, together with the description, explain these embodiments. In the drawings:
Figure 1 is a schematic perspective view of a vessel forming part of an apparatus for pipeline inspection;
Figure 2 is a schematic perspective view of a sensor unit and carrier for use in the embodiment of Figure 1;
Figure 3 is a schematic perspective view of the carrier in Figures 1 and 2;
Figure 4 is a schematic perspective view of a vessel similar to the vessel in Figure 1, but including multiple sensor units; and
Figure 5 is a schematic diagram showing a vessel of the kind shown in Figure 4 operable through a pipeline having multiple bore diameters.

The following description of the exemplary embodiments refers to the accompanying drawings. The same reference numbers in different drawings identify the same or similar elements. The following detailed description does not limit the invention. Instead, the scope of the invention is defined by the appended claims.

Reference throughout the disclosure to "an exemplary embodiment," "an embodiment," or variations thereof means that a particular feature, structure, or characteristic described in connection with an embodiment is included in at least one embodiment of the subject matter disclosed. Thus, the appearance of the phrases "in an exemplary embodiment," "in an embodiment," or variations thereof in various places throughout the disclosure is not necessarily referring to the same embodiment. Further, the particular features, structures or characteristics may be combined in any suitable manner in one or more embodiments.

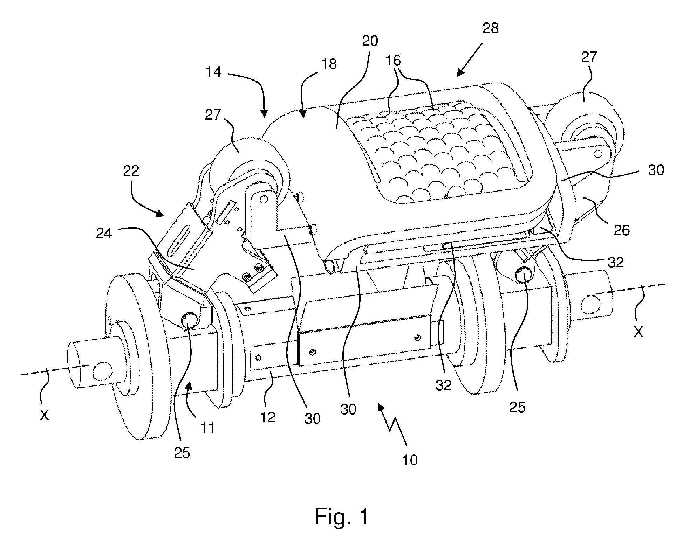

Referring firstly to Figure 1, part of a pipeline inspection apparatus for in-line inspection of pipelines is indicated generally at 10.

The apparatus 10 includes a vessel 11 having a central body 12 and a longitudinal axis X (extending left to right as viewed in Figure 1). A sensor unit 14 is mounted on said body 12. The sensor unit 14 includes an array of ultrasonic sensors 16 for inspecting a pipe wall.

The sensor unit 14 includes a skid 18 having an outer surface 20 intended to run adjacent or in contact with a pipe wall, in use. The outer surface 20 is arcuate in a circumferential direction with respect to the longitudinal axis X. The sensors 16 also define an arcuate inspection plane in a circumferential direction with respect to the longitudinal axis X. The inspection plane is arranged at a stand off from the outer surface of the skid 18 (e.g. radially inward of the outer surface 20), for protecting the sensors 16 against wear or other damage from contact with the pipe wall.

The ultrasonic sensors 16 within the inspection array can be orientated normally to the pipe wall for wall thickness evaluation or at an angle to the pipe wall so as to induce shear waves and identify any cracks in the pipeline, for example.

The apparatus 10 includes a spring-loaded mechanism 22 for permitting movement of the sensor unit 14 with respect to the longitudinal axis of the central body 12, e.g. in response to changes in bore diameter.

The mechanism 22 is configured for biasing the sensor unit 14 in a generally radial direction, in order to bias the outer surface 20 of the skid 18 in the direction of a pipe wall. More particularly, the mechanism 22 is configured for moving the sensor unit 14 between a first radial position (e.g. a retracted position for use in a small diameter bore) and a second radial position (e.g. an extended position for use in a large diameter bore), in response to changes in pipe diameter. The mechanism 22 is configured to position the sensor unit 14 at an appropriate radial position (e.g. intermediate said first and second radial positions), depending on the size of the bore through which the apparatus 10 is passing. Hence, the apparatus 10 can be used for inspection of multi-diameter pipelines or across a range of pipelines having different diameters.

The mechanism 22 includes first and second suspension members 24, 26 configured for biasing the sensor unit 14 in the direction of a pipe wall (e.g. in a radial or outward direction relative to the longitudinal axis X). The first and second suspension members 24, 26 are axially off set from one another, with respect to the longitudinal axis of the central body 12.

The first and second suspension members 24, 26 are connected to body 12 by a spring-biased pivotal connection 25, so as to be configured to pivot relative to said longitudinal axis of the central body 12. The suspension members 24, 26 are biased towards said second radial position (i.e. an extended position relative to the body 12). Hence, the suspension members 24, 26 act as spring-biased struts or arms which are movable relative to the central body 12 of the vessel 11, for positioning the sensor unit 14 adjacent the pipe wall.

A roller 27 is provided at the end of each suspension member 24, 26, for rolling contact with the internal surface of a pipe along which the apparatus is travelling, in use.

The first and second suspension members 24, 26 form part of a linkage 28, which is configured for movement of the sensor unit 14 radially with respect to the longitudinal axis of the central body 12, e.g. between the first radial position and second radial position, in response to changes in bore diameter as the suspension rollers 27 react against the pipe wall.

The linkage 28 includes a carrier 30 arranged for movement with said first and second suspension members 24, 26. The sensor unit 14 is mounted on said carrier 30.

The carrier 30 is mounted between the first and second suspension members 24, 26, and the carrier 30 is arranged to remain parallel with the longitudinal axis of the central body 12 during movement of the sensor unit 14.

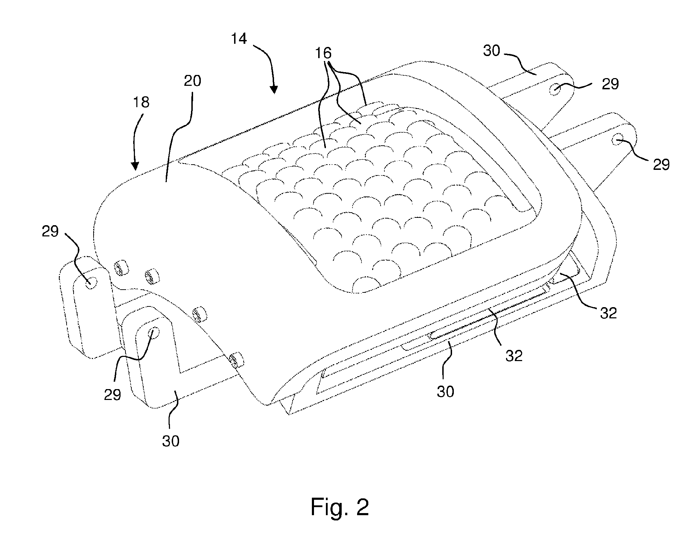

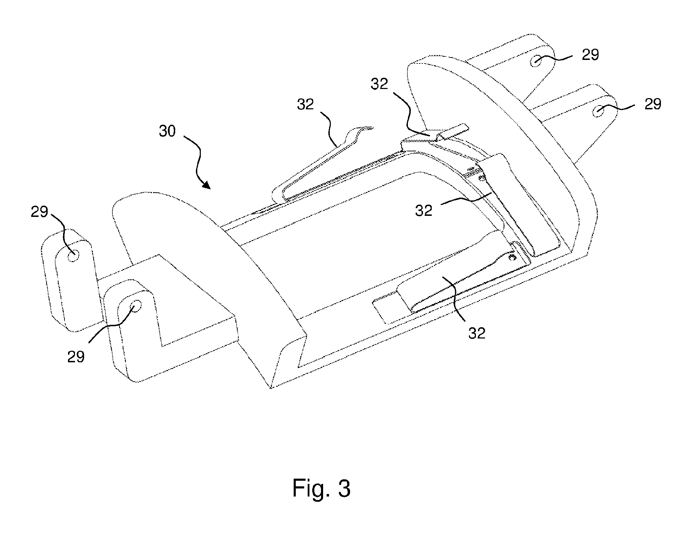

As can be seen clearly in Figures 2 and 3, the carrier 30 includes pivot points 29 for connection to the first and second suspension members 24, 26.

As can be seen most clearly in Figure 3, the carrier 30 biasing elements in the form of leaf springs 32, which are arranged beneath the sensor unit 14. The biasing elements provide local biasing of the sensor unit 14 relative to the longitudinal axis of the central body 12, e.g. in the direction of the pipe wall.

The spring-loaded mechanism 22 ensures that the sensors 16 are deployed adjacent the pipe wall, even in bends (where conventional systems fail or are highly unreliable). Moreover, the localised biasing of the sensor unit 14 on the carrier 30 assists in providing correct orientation and clamping force of the skid 18 against the pipe wall.

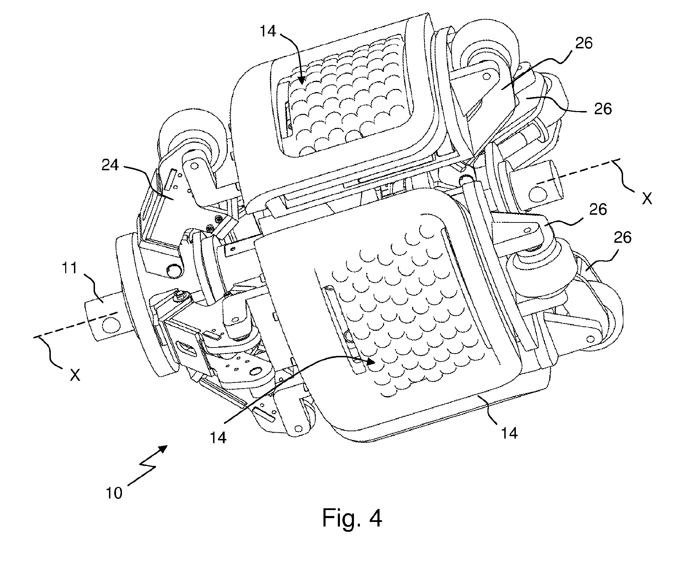

As shown in Figure 4, the vessel 11 may be provided with multiple sensor units 14, each of which is movably mounted on said central body 12 in the manner described above. In the exemplary embodiment of Figure 4, the vessel 11 includes four sensor units (only 3 of which are visible as viewed in Figure 4) arranged at 90 degrees to one another in a ring about the longitudinal axis X.

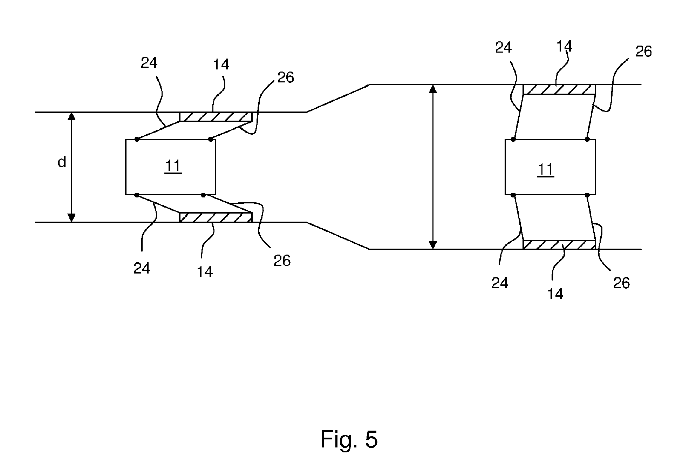

The apparatus 10 is suited for use inspecting a pipeline having a first section with a first bore diameter and a second section with a second bore diameter (i.e. less than or greater than the first bore diameter). The apparatus 10 can be sent on a continuous run through said first and second sections of the pipeline. The mechanism 22 is used to bias the sensor unit 14 against an inner surface of the first section and to automatically bias the sensor unit 14 against an inner surface of the second section upon a change in bore diameter between said first and second sections of the pipeline. An example is shown in Figure 5.

The apparatus 10 permits accurate modelling of the biasing forces required to maintain the skid 18 in contact with the pipe wall, providing a significant improvement over conventional skid designs.

The apparatus 10 is advantageous, at least insofar as it should reduce the time required to design a skid for a given diameter of pipe, by allowing the required forces to be calculated in an early stage in the design procedure, reducing or obviating the need for optimisation loops and other acts of trial and error.

Moreover, the linkage 28 permits use of the apparatus across a range of pipeline diameters, including improved tracking of the pipe bore, especially in bends and through restrictive pipeline features such as tapers, valves, etc.

Each linkage 28 can move independently with respect to the other linkages 28 on the vessel 11. This enables the apparatus to pass through and inspect tight bend diameters and difficult or restrictive pipeline features such as tapers, valves, etc. It is envisaged that exemplary embodiments will be cable of inspection through 1D bends and mitre bends.

In the exemplary embodiment of Figure 1, the linkage 28 takes the form of a 4-bar linkage, consisting of the body 12, suspension members 24, 26 and carrier 30. Other forms of collapsible linkage may be applicable, e.g. a 5-bar linkage including said suspension members 24, 26, configured to ensure that the sensor unit 14 tracks the pipe wall irrespective of the attitude of the internal pig body 12 within the pipeline.

Although Figure 1 is described with spring-loaded suspension members in the form of pivotable arms or struts, other types of suspension may be employed. Although Figure 3 is described with leaf springs for local biasing of the sensor unit on the carrier, other forms of resilient biasing element may be incorporated. Although Figure 4 shows an embodiment having a ring of four sensor units, other embodiments may consist of three or more sensor units per ring. Multiple rings of sensor units may be included per vessel 11.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended and are understood to be within the scope of the claims.

## Claims

1. Apparatus for pipeline inspection, the apparatus comprising a body having a longitudinal axis and a sensor unit in association with said body,
wherein the sensor unit includes an array of ultrasonic sensors for inspecting a pipe wall, and further includes a skid having an outer surface intended to run adjacent or in contact with a pipe wall, wherein said sensors are arranged at a stand off from the outer surface of the skid,
and further wherein the apparatus includes a mechanism for biasing the outer surface of the skid into contact with a pipe wall, and for permitting movement of the sensor unit between a first radial position and a second radial position in response to changes in pipe diameter.

2. Apparatus according to claim 1 wherein said mechanism is configured for biasing the sensor unit in the direction of a pipe wall in both of said first and second radial positions.

3. Apparatus according to claim 1 wherein said mechanism includes first and second suspension members configured for biasing the sensor unit in a radial direction, and wherein said first and second suspension members are axially off set from one another with respect to the longitudinal axis of the body.

4. Apparatus according to claim 3 wherein said first and second suspension members are configured to pivot relative to said longitudinal axis of the body.

5. Apparatus according to claim 4 wherein said first and second suspension members form part of a linkage configured to move the sensor unit radially with respect to the longitudinal axis of the body, between a first radial position and a second radial position in response to changes in pipe diameter.

6. Apparatus according to claim 1 wherein said mechanism defines a collapsible linkage arranged to move the sensor unit radially with respect to the longitudinal axis of the body, between a first radial position and a second radial position in response to changes in pipe diameter.

7. Apparatus according to claim 6 wherein the linkage includes first and second suspension members arranged to pivot relative to said longitudinal axis of the body, for moving the sensor unit radially with respect to the longitudinal axis of the body, between a first radial position and a second radial position.

8. Apparatus according to claim 7 wherein the linkage includes a carrier arranged for movement with said first and second suspension members, wherein said carrier is arranged to remain parallel with said longitudinal axis of the body during movement of the sensor unit.

9. Apparatus according to claim 8 wherein the sensor unit is mounted on said carrier.

10. Apparatus according to claim 1 wherein the sensor unit is mounted on a carrier, said carrier is mounted between first and second suspension members, and said first and second suspension members are arranged to pivot relative to said longitudinal axis of the body, for moving the sensor unit between a first radial position and a second radial position in response to changes in pipe diameter.

11. Apparatus according to claim 10, wherein the carrier includes biasing elements for locally biasing the sensor unit in a radial direction.

12. Apparatus according to claim 11 wherein the carrier is arranged for movement with said first and second suspension members, and said carrier is arranged to remain parallel with said longitudinal axis of the body during movement of the sensor unit.

13. Apparatus according to claim 1, wherein the apparatus includes multiple sensor units movably mounted on said body.

14. A method of pipeline inspection for a pipeline having a first section with a first bore diameter and a second section with a second bore diameter which is less than or greater than the first bore diameter, said method including the steps of:
providing a pipeline apparatus for in-line inspection of the pipeline, said apparatus including a sensor unit including an array of ultrasonic sensors for inspecting the wall of the pipeline; and sending the apparatus on a continuous run through said first and second sections of the pipeline, wherein a mechanism on said apparatus is used to position the sensor unit against an inner surface of the first section and to automatically re-position the sensor unit against an inner surface of the second section upon a change in bore diameter between said first and second sections of the pipeline.

15. A method according to claim 14 wherein the mechanism is configured for biasing the sensor unit in a radial direction, and wherein the sensor unit is spring-biased for movement from a first radial position to a second radial position during movement of the apparatus through a pipeline, if said second bore diameter is greater than said first bore diameter
